# EUROPÄISCHE PATENTSCHRIFT

(11) **EP 4 302 396 B1**
(45) Veröffentlichungstag und Bekanntmachung des Hinweises auf die Patenterteilung: **23.04.2025**
(21) Anmeldenummer: 22712902.0
(22) Anmeldetag: 01.03.2022
(51) Int. Cl.: H02S 20/00

(54) **SCHWIMMENDE TRAGSTRUKTUR FÜR PV-MODULE**
FLOATING SUPPORT STRUCTURE FOR PV MODULES
STRUCTURE DE SUPPORT FLOTTANTE POUR MODULES PHOTOVOLTAÏQUES

(30) Priorität: 05.03.2021 DE 102021105404
(43) Veröffentlichungstag der Anmeldung: 10.01.2024
(73) Patentinhaber: SBP Sonne GmbH, 70197 Stuttgart (DE)
(72) Erfinder: BALZ, Markus, 72649 Wolfschlugen (DE); GÖCKE, Verena, 70180 Stuttgart (DE); SCHÖNFELDER, Vanessa, 70186 Stuttgart (DE); GOVAERS, Philipp, 88090 Immenstaad (DE)
(74) Vertreter: DREISS Patentanwälte PartG mbB
(86) Internationale Anmeldenummer: PCT/EP2022/055174
(87) Internationale Veröffentlichungsnummer: WO 2022/184724

(56) Entgegenhaltungen:
- DE-A1- 102011 009 424
- KR-A- 20110 078 800

## Beschreibung

Die Erfindung betrifft eine Vorrichtung zur Erzeugung von elektrischer Energie mittels Photovoltaik in einer aquatischen Umgebung. Insbesondere handelt es sich um eine anpassungsfähige und modulare Vorrichtung, die aus mehreren aufblasbaren schwimmfähigen Pontons besteht auf denen eine Struktur zur Aufnahme von Photovoltaik-Modulen (PV-Module) ruht.

Im letzten Jahrzehnt wurden schwimmende PV-Anlagen (sog. Floating PV) entwickelt. Sie entsprechen sowohl der Notwendigkeit, eine umweltfreundliche Methode der Stromerzeugung zu entwickeln, als auch dem Wunsch, den Flächenbedarf der PV-Anlagen zu minimieren. Die Vorteile dieser Strukturen sind zahlreich: Neben der Freihaltung landwirtschaftlicher Produktionsflächen ermöglichen sie die wirtschaftliche Nutzung von Gewässern (Bewässerungsbecken, Seen etc.) und Industriebrachen (stillgelegte Steinbrüche). Auch das von schwimmenden Photovoltaikanlagen bedeckte Wasser profitiert, da die PV-Anlagen die Erwärmung und Verdunstung des Wassers begrenzen. Sie verhindern auch die Vermehrung von Algen und invasiven Pflanzen, indem sie die Temperatur begrenzen und die Sonneneinstrahlung auf die bedeckten Flächen reduzieren.

Aus der FR 3 084 052, der DE 102011009424 A1 und der WO 2007062278 A sind schwimmende PV-Anlagen bekannt. Die Schwimmkörper der aus der FR 3 084 052 vorbekannten PV-Anlage sind aufblasbar.

### Zusammenfassung der Erfindung

Die vorliegende Erfindung zielt darauf ab, die Nachteile des bisherigen Standes der Technik mindestens teilweise zu überwinden und insbesondere eine modulare, anpassungsfähig, leicht transportierbare und wirtschaftliche Floating PV-Anlage bereitzustellen.

Diese Aufgabe wird erfindungsgemäß bei einer schwimmenden Tragstruktur für Photovoltaik-Module, gemäß dem Anspruch 1, umfassend mindestens zwei nebeneinander oder parallel zueinander angeordnete Schwimmkörper und Träger, auf denen PV-Module angebracht sind, dadurch gelöst, dass die Träger zwei gerade Abschnitte aufweisen, deren Längsachsen einen Winkel β einschließen, wobei der Winkel β kleiner als 180° und größer als 135° ist, dass zwischen zwei oder mehr nebeneinander angeordneten Trägern eine Membran vorgesehen ist, und dass mindestens zwei Träger der Tragstruktur und die Membran und/oder zwei Schwimmkörper und die Membran ein membranversteiftes Tragwerk bilden. Die Verbindung zwischen Trägern und Membran bzw. zwischen Schwimmkörpern und Membran kann direkt oder mittelbar über ein Zwischenstück, z. B. einem Knotenblech oder eine Schiene, erfolgen.

Durch die erfindungsgemäße hybride Konstruktion, umfassend Träger und eine Membran, wird eine sehr leichte und trotzdem belastbare Tragstruktur geschaffen, die ohne Weiteres auf Schwimmkörpern angeordnet werden kann. Ein Vorteil der erfindungsgemäßen Struktur ist darin zu sehen, dass die Träger die vertikalen Lasten, insbesondere die Gewichtskraft, aber auch Windlasten, die von den PV-Modulen in die Tragstruktur eingeleitet werden, aufnehmen und in die Schwimmkörper einleiten. Querkräfte oder Schubkräfte, die im Wesentlichen parallel zur Wasseroberfläche, auf denen die Schwimmkörper schwimmen, auf die Struktur einwirken, werden überwiegend von der Membran aufgenommen. Die Membran kann diese Kräfte über die gesamte Fläche aufnehmen bzw. ableiten, so dass sich eine sehr belastbare und trotzdem sehr leichte Konstruktion ergibt.

Ein weiterer Vorteil des erfindungsgemäßen membranversteiften Tragwerks ist darin zu sehen, dass mit zunehmenden Gewichtskräften, die auf die Träger der Tragstruktur wirken, die Träger dazu tendieren, sich aufzuweiten. Dieser Vorgang wird ebenfalls durch die Membran, die zwischen den Endpunkten der Träger angeordnet ist, aufgefangen. Dadurch wird die erfindungsgemäße Membran vorgespannt, was die Steifigkeit und Belastbarkeit des erfindungsgemäßen Tragwerks weiter erhöht.

Um die Kraftübertragung zwischen den Trägern und der Membran auf einfache Weise auch über eine lange Betriebsdauer hinweg zu gewährleisten, ist vorgesehen, dass die Enden der Träger und die Membran direkt oder mittelbar miteinander formschlüssig oder kraftschlüssig verbunden sind. In einer einfachen Ausführungsform kann eine formschlüssige Verbindung darin bestehen, dass die Membrane an den entsprechenden Stellen Löcher aufweisen, die in der Regel durch (Lochverstärkungs-)Ringe aus Metall verstärkt sind. Durch diese Löcher kann eine Schraube gesteckt werden, mit deren Hilfe der Träger und die Membran formschlüssig miteinander verbunden werden. Diese Art der formschlüssigen Verbindung ist fertigungstechnisch sehr einfach zu handhaben. Es ergibt sich dadurch eine lösbare Verbindung, so dass erstens die Montage des erfindungsgemäßen Tragwerks vereinfacht wird und auch im Fall einer Beschädigung, sei es des Trägers oder der Membran, das beschädigte Bauteil vor Ort und ohne größeren Aufwand ausgewechselt werden kann.

In vorteilhafter Ausgestaltung bestehen die Träger aus einem Strangpressprofil, das beispielsweise aus Aluminium hergestellt ist. Das Strangpressprofil ermöglicht es, einen belastungsgerechten Querschnitt bereitzustellen, der den auftretenden Belastungen in idealer Weise gerecht wird und gleichzeitig wenig Materialeinsatz erfordert. Außerdem, können Funktionsflächen in das Strangpressprofil eingearbeitet werden. Beispielsweise kann in dem Strangpressprofil eine "T"-Nut ausgebildet sein, so dass die PV-Module mit Hilfe von Nutensteinen oder geeignet geformten Hammerkopf-Schrauben auf einfache Weise mit dem Träger verschraubt werden können.

Die Träger weisen zwei gerade Abschnitte auf, deren Länge in etwa der Länge der PV-Module entspricht, so dass die PV-Module direkt auf den geraden Abschnitten der Träger aufliegen und dort befestigt werden können. Es ist meist auch ausreichend, wenn die Länge der geraden Abschnitte etwa 2/3 der Länge der PV-Module beträgt. Das ermöglicht eine noch kompaktere und wirtschaftlichere Bauweise.

Wenn die Träger aus einem Strangpressprofil gefertigt werden, ist es ohne zusätzlichen Fertigungsaufwand möglich, dieses Strangpressprofil so zu gestalten, dass die PV-Module ohne gesonderten Rahmen auf den Trägern befestigt werden können. Dadurch werden Material und Kosten eingespart und das Systemgewicht wird reduziert.

Der erfindungsgemäße Winkel zwischen den geraden Abschnitten der Träger wird bei einem Strangpressprofil in der Regel durch Biegen desselben hergestellt. Es ist ohne weiteres möglich, Aluminium-Strangpressprofile um einen Winkel zwischen 0° und 45° abzubiegen. Dies gilt insbesondere dann, wenn ein großer Biegeradius möglich ist. Genau das ist bei der erfindungsgemäßen Anwendung der Fall.

Als Schwimmkörper kommen in bevorzugter Ausgestaltung aufblasbare Schwimmkörper bzw. Schwimmkörper mit einer flexiblen Membran in Betracht, die aus einer gewebeverstärkten Plane hergestellt sind. Bevorzugt handelt es sich dabei um eine mit Glasfasern verstärkte PVC-Plane, wie sie auch im Bereich von Abdeckungen für Lkws (sogenannte Lkw-Plane) seit Jahren bekannt sind. Aus diesen Planen wird ein luftdichter Schwimmkörper gefertigt, der dann vor Ort aufgeblasen wird. Optional kann der Schwimmkörper mit einem schwimmfähigen Füllmaterial, wie beispielsweise Kork, Styropor, luftgefüllten Kunststoffkugeln oder auch kleineren Schwimmkörpern, wie z.B. PET-Getränkeflaschen oder anderen verschließbaren Hohlkörpern gefüllt werden. Diese Flaschen können, anstatt sie zu recyceln, auch in das Innere des Schwimmkörpers eingebracht werden und dienen dort als Schwimmkörper. In Manchen Fällen, zum Beispiel, wenn als Füllkörper ein quaderförmiger Hohlkörper eingesetzt wird, könne die Hohlkörper den Schwimmkörpern zusätzliche mechanische Festigkeit verleihen.

Ein Vorteil der gewebeverstärkten PVC-Planen ist, dass sie beispielsweise durch Ultraschall-Schweißen luftdicht und flächig miteinander verbunden werden können. Dadurch ist es sehr einfach und produktionssicher möglich, einen luftdichten Schwimmkörper aus solchen Planen herzustellen. An einem oder beiden Enden des Schwimmkörper kann dieser durch einen aus dem outdoor-Bereich bekannten Rollverschluss wasser- und luftdicht verschlossen werden. Diese für Fahrradpacktaschen und Rucksäcke bekannten Rollverschlüsse sind wasserdicht. Sie sind können auch luftdicht sein, wenn die Folie mehrmals eingerollt wird und/oder im Bereich der Rollverschlüsse vor dem Einrollen ein Klebstoff, bzw. Dichtmittel auf die Plane aufgetragen wird.

Es ist auch möglich, an der Außenseite des Schwimmkörpers Laschen oder Taschen ebenfalls durch Ultraschall-Schweißen aus dem gleichen Material zu befestigen, so dass die eigentliche Tragstruktur mit diesen Laschen oder Taschen mit dem Schwimmkörper verbunden werden kann.

Beispielsweise kann eine Tragstruktur bzw. ein Koppelelement der Tragstruktur in der Art eines Spanngurts mit einer solchen Lasche verbunden werden. Es ist aber auch möglich, an den Laschen eine oder mehrere Löcher vorzusehen und das Koppelelement mit Hilfe der Löcher mit der Lasche, und damit auch mit dem Schwimmkörper, zu verschrauben.

Es ist auch möglich, eine schmale längliche Tasche außen an dem Schwimmkörper vorzusehen, die mindestens an einem Ende offen ist und ggf. mehrere Öffnungen aufweist. In jede der länglichen Taschen kann ein Stab oder ein Rohr eingeschoben werden, das im Bereich der Öffnungen in der Tasche ein Befestigungsgewinde aufweist. Mit Hilfe dieser Befestigungsgewinde können die Koppelelemente oder die Träger direkt mit dem Stab oder Rohr verschraubt werden. dadurch ergibt sich eine Versteifung des Schwimmkörpers durch den Stab/das Rohr. Außerdem werden die Kräfte der Tragstruktur über die gesamte Länge des Schwimmkörpers in diesen eingeleitet.

Selbstverständlich ist es vorteilhaft, wenn diese Löcher durch Lochverstärkungsringe aus Metall verstärkt sind, so dass die Laschen bzw. Taschen nicht einreißen, dort wo die Befestigungsschraube angesetzt wird.

Es ist möglich und vorteilhaft, dass die Koppelelemente, welche die Tragstruktur mit den Schwimmkörpern verbinden, eine formschlüssige, stoffschlüssige oder kraftschlüssige Verbindung zwischen den Schwimmkörpern und der Tragstruktur herstellen. Beispielsweise ist es möglich, dass das Koppelelement durch eine Klemmung, ähnlich einer Schraubzwinge, mit entsprechend geformten und positionierten Laschen am Schwimmkörper befestigt wird. Ebenso ist es aber auch möglich, wie bereits oben erwähnt, mit Hilfe von Schrauben oder Splinten das Koppelelement mit entsprechenden Löchern in einer Lasche zu befestigen.

Es ist auch möglich, dass das Koppelelement flächenartige Füße aufweist, die in einseitig offene Taschen an der Außenseite des Schwimmkörpers eingeschoben werden. Wenn mehrere solcher Taschen vorhanden sind, dann wird das Koppelelement formschlüssig in diesen Taschen gehalten, sobald der Schwimmkörper aufgeblasen bzw. mit Füllkörpern gefüllt wird.

Um die Effizienz und Wirtschaftlichkeit der Floating PV-Anlage zu verbessern, ist vorgesehen, dass die Membran das auf ihr auftreffende Licht auf die PV-Module reflektiert, so dass auch die Unterseite der PV-Module mit Sonnenlicht beaufschlagt wird. In weiterer vorteilhafter Ausgestaltung der Erfindung ist vorgesehen, dass die PV-Module sogenannte bifaziale PV-Module sind, die sowohl an ihrer Oberseite als auch an ihrer Unterseite auftreffendes Sonnenlicht in elektrische Energie umwandeln können.

Es hat sich herausgestellt, dass der Winkel β bevorzugt kleiner als 170° und größer als 150° sein sollte und dass es besonders vorteilhaft ist, wenn der Winkel β kleiner als 165° und größer als 155° ist. Dann ergibt sich ein besonders günstiges Betriebsverhalten der PV-Module, durch die Schrägstellung der PV-Module und andererseits wird die erfindungsgemäße Tragstruktur mit den Trägern und der Membran dadurch besonders belastbar. In Summe ergibt sich dadurch eine sehr leichte und trotzdem steife Tragstruktur, welche die PV-Module aufnimmt.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: eine isometrische Darstellung eines Ausführungsbeispiels einer erfindungsgemäßen Floating PV-Anlage,
- Figur 2: eine Seitenansicht der Floating PV-Anlage,
- Figur 3: ein Ausschnitt der Figur 2 in vergrößerter Darstellung,
- Figur 4: ein Längsschnitt durch ein Ausführungsbeispiel eines Schwingkörpers mit angesetzter Tasche und
- Figur 5: Schnittdarstellungen durch einen Schwimmkörper gemäß Figur 4.

### Beschreibung des Ausführungsbeispiels

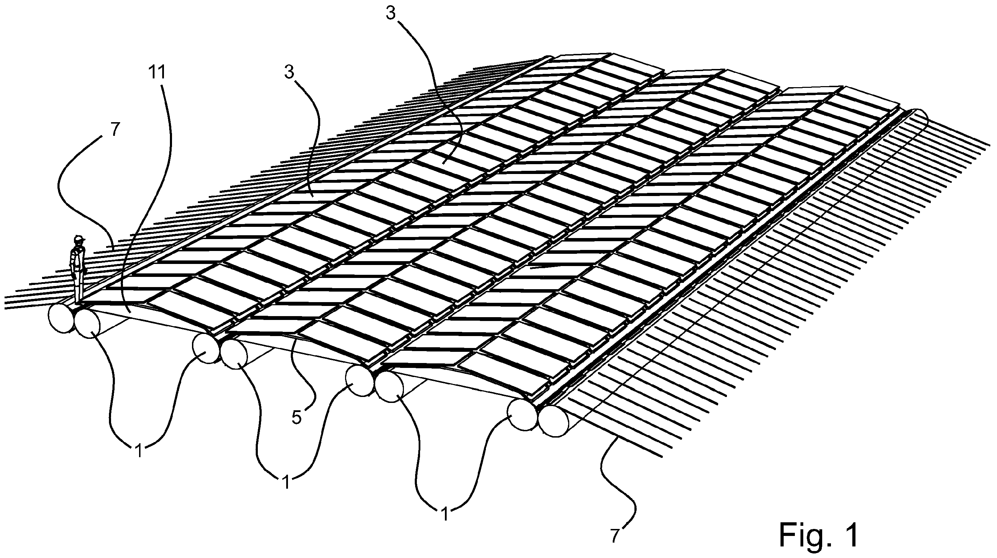

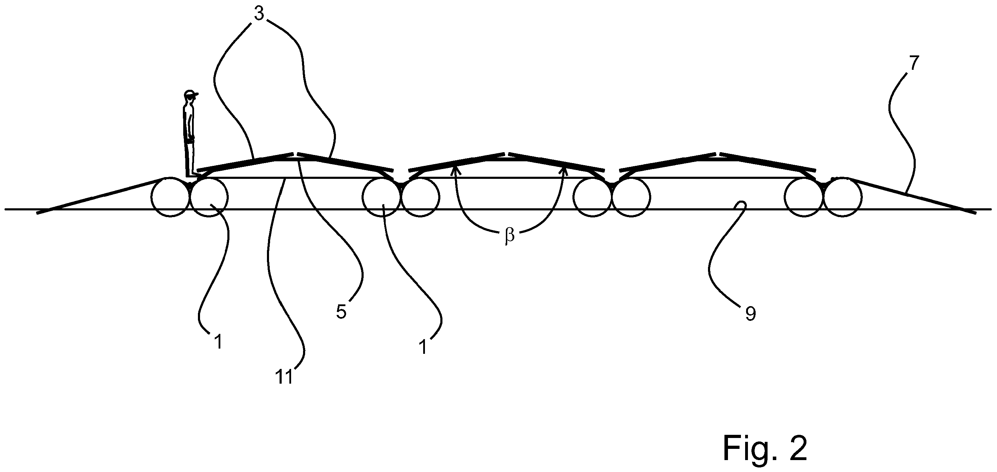

In der Figur 1 ist in einer Isometrie ein Ausführungsbeispiel einer erfindungsgemäßen Floating PV-Anlage dargestellt. Sie umfasst mehrere Reihen von Schwimmkörpern 1, die parallel zueinander angeordnet sind. Wie sich aus den Figuren 1 und 2 ergibt, können mehrere Paare von Schwimmkörpern 1 nebeneinander angeordnet werden, so dass mehrere Reihen von PV-Modulen 3 nebeneinander angeordnet sind. Bei dem Ausführungsbeispiel gemäß der Figur 1 und 2 sind drei mal zwei Schwimmkörper 1 nebeneinander angeordnet, so dass insgesamt sechs Reihen von PV-Modulen nebeneinander angeordnet sind.

Jeweils zwei Schwimmkörper 1 tragen zwei Reihen von PV-Modulen 3, die in der Art eines Satteldachs angeordnet sind.

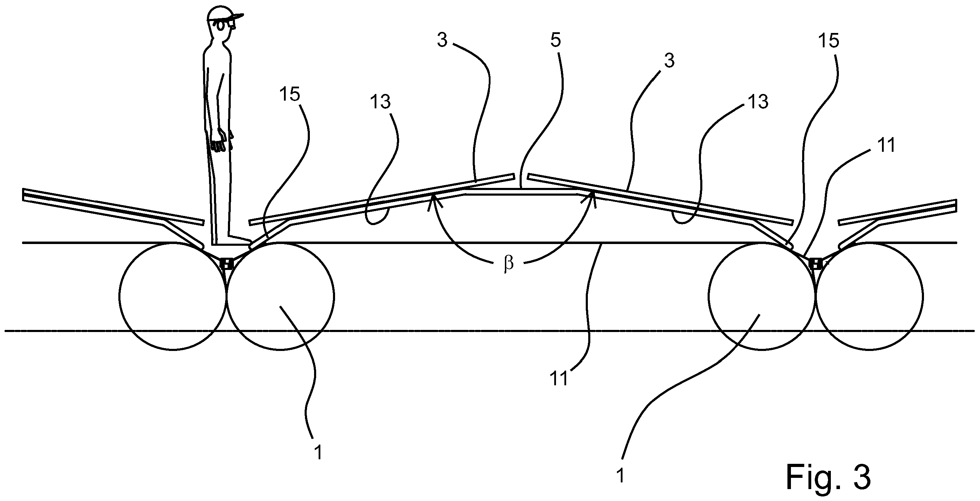

Die PV-Module 3 werden, wie aus den Figuren 2 und 3 besser erkennbar ist, von Trägern 5 getragen, die wiederum mit den Schwimmkörpern 1 verbunden sind. Der Wasserspiegel ist in der Figur 2 mit dem Bezugszeichen 9 gekennzeichnet.

Die äußeren Schwimmkörper 1 der Figuren 1 und 2 tragen keine PV-Module 3. 5. Vielmehr sind an diesen äußeren Schwimmkörpern 2 Abspannseile 7 angeordnet, mit deren Hilfe die schwimmende PV-Anlage vor dem Abtreiben geschützt und in einer vorgegebenen Position gehalten wird.

Neben den Trägern 5, auf welchen die PV-Module 3 befestigt sind, ist ein wesentlicher Bestandteil der erfindungsgemäßen Tragstruktur eine Membran 11, die zwischen zwei parallel zueinander verlaufenden Schwimmkörpern 3 aufgespannt ist. Die Membran 11 bildet zusammen mit den Trägern 5 und ggf. weiteren Elementen ein membranversteiftes Tragwerk.

Die Figur 3 zeigt einen Ausschnitt aus der PV-Anlage gemäß der Figuren 1 und 2 etwas vergrößert. Anhand dieser Figur ist die Form der Träger 5 besser zu erkennen. Wie sich aus der Figur 3 ergibt, weisen die Träger 5 zwei gerade Abschnitte 13 auf, die einen Winkel β von beispielsweise 165° einschließen. Durch den Winkel β ergibt sich die satteldachförmige Anordnung von den zwei Reihen von PV-Modulen 3.

Bei diesem Ausführungsbeispiel ist ein Verbindungsabschnitt zwischen den geraden Abschnitten 13 des Trägers 5 als waagerechter Abschnitt ausgebildet. Dadurch wird der Biegewinkel zwischen den geraden Abschnitten 13 in zwei gleich große Winkel aufgeteilt. Das kann Vorteile bieten beim Biegen des Trägers 5 aus einem geraden Strangpressprofil. Es ist auch möglich, einen großen Krümmungsradius zwischen den geraden Abschnitten 13 vorzusehen, um ein Knicken des Trägers 5 beim Biegen zu vermeiden.

An den äußeren Enden ist der Träger 5 ebenfalls etwas abgewinkelt. Die abgewinkelten kurzen Endabschnitte sind mit 15 bezeichnet. Durch das Abwinkeln der Endabschnitte 15 ergibt sich in vertikaler Richtung ein gewisser Abstand zwischen den PV-Modulen 3 und den Schwimmkörpern 1. Außerdem können die Endabschnitte 15 so abgewinkelt sein, dass sie tangential auf den in diesem Ausführungsbeispiel zylindrischen Schwimmkörpern aufliegen.

Die Membran 11 ist im Bereich der Endabschnitte 15 mit den Trägern 5 verbunden, so dass die Träger 5 und die Membran 11 ein membranversteiftes Tragwerk bilden.

Die Träger 5 sind vorteilhafterweise als Strangpressprofil zum Beispiel aus Aluminium hergestellt. Dadurch können an dem Strangpressprofil Funktionsflächen ausgebildet werden, die beispielsweise eine Auflagefläche für die PV-Module 3 im Bereich der geraden Abschnitte 13 bieten. Es können in das Strangpressprofil auch T-Nuten eingeformt werden, so dass die PV-Module 3 mit Hilfe von Nutensteinen oder Hammerkopfschrauben auf einfache Weise im Bereich der geraden Abschnitte 13 mit dem Träger verschraubt werden können.

Des Weiteren ist es möglich, die Träger 5 entsprechend den zu erwartenden Belastungen zu dimensionieren, so dass mit geringem Materialaufwand eine belastbare Struktur entsteht.

Bei der Auslegung des Strangpressprofils ist darauf zu achten, dass der Träger 5 noch gebogen werden kann, um den Winkel β zwischen den geraden Abschnitten 13 erzeugen zu können. Aber auch die Endabschnitte 15 schließen mit den geraden Abschnitten 13 einen Winkel ein, so dass auch im Übergang zwischen den Abschnitten 13 und den Endabschnitten 15 die Träger 5 gebogen werden müssen.

Anhand der Figur 3 wird deutlich, dass vertikale Lasten, die von dem Träger 5 aufgenommen werden, dazu führen, dass der Träger 5 sich seitlich ausweichen will. Dann würde sich der Abstand der Endabschnitte 15 eines Trägers 5 mit zunehmender Belastung größer werden. Das ist allerdings unerwünscht.

Weil erfindungsgemäß die Endabschnitte 15 mit der Membran 11 formschlüssig oder kraftschlüssig verbunden sind, versteift die Membran 11 die Träger 5, so dass ein seitliches Ausweichen der Endabschnitte 15 wirkungsvoll verhindert wird. Dadurch können die Träger 5 kleiner und leichter dimensioniert werden, was die Herstellungskosten reduziert und das Gewicht der Floating PV-Anlage reduziert.

Die Membran 11 ist vorzugsweise aus einem Material, welches das einfallende Sonnenlicht reflektiert, so dass auch die Unterseite der PV-Module 3 mit Sonnenlicht beaufschlagt wird. Infolgedessen sind die PV-Module 3 bevorzugt bifaziale PV-Module, die Sonnenlicht sowohl an der Oberseite (oben in der Figur 3) als auch von der Unterseite in elektrische Energie umwandeln können. Zur Optimierung von Effizienz und Wirtschaftlichkeit der PV-Anlage kann es sinnvoll sein, einen gewissen Abstand zwischen den PV-Modulen sowohl in Längsrichtung als auch in Querrichtung vorzusehen. Dann wird die Zahl der PV-Module bei gleicher Grundfläche der PV-Anlage verringert; wegen der reflektierenden Membran und der Verwendung von bifazialen PV-Modulen bleibt der Ertrag an elektrischer Energie nahezu gleich.

Um die Schwimmkörper 1 vor der UV-Strahlung des Sonnenlichts zu schützen, ist es möglich, die Membran 11 über die Endabschnitte 15 der Träger 5 hinaus zu verlängern, so dass der Teil des Schwimmkörpers, welcher dem Sonnenlicht ausgesetzt wäre, vor diesem geschützt wird. Damit wird der durch die UV-Strahlung verursachte Alterungsprozess der Schwimmkörper 1 nahezu vollständig vermieden. Außerdem wird die Reflektion des Sonnenlichts auf die Unterseite der benachbarten PV-Module erhöht.

In der Figur 3 ist auf einer Seite, nämlich an dem rechten Ende der Membran 11, diese so ausgeführt, dass sie einen Teil des Schwimmkörpers 1 vor Sonnenlicht schützt.

Die Membran 11 hat neben den statischen Vorteilen und der Erhöhung der Stromerzeugung durch die Reflektion des einfallenden Sonnenlichts noch einen wichtigen weiteren Vorteil. Zusammen mit den PV-Modulen 3 bewirkt die Membran 11, dass weniger Sonnenlicht auf dem Wasser auftritt. Dadurch wird die Erwärmung des Wassers reduziert und infolgedessen werden weniger Algen gebildet und in vielen Fällen ist die Qualität des Wassers und den vom Wasser gebildeten Lebensraum für Fische und aquatische Pflanzen förderlich.

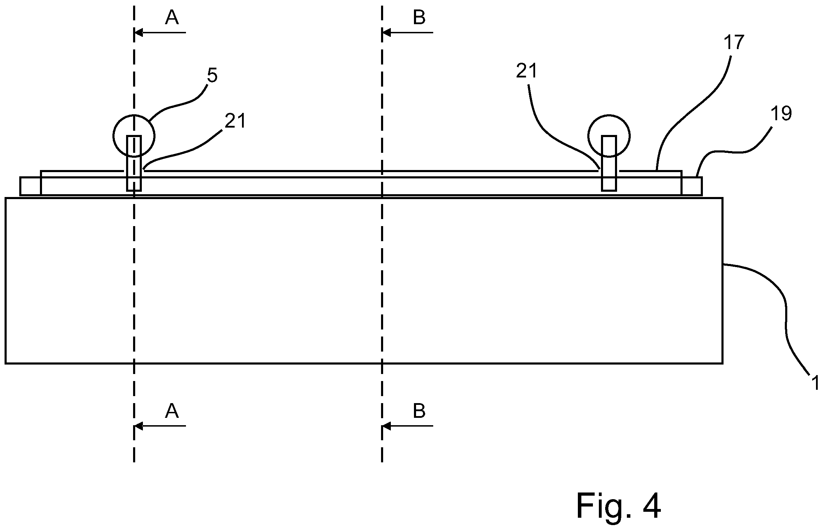

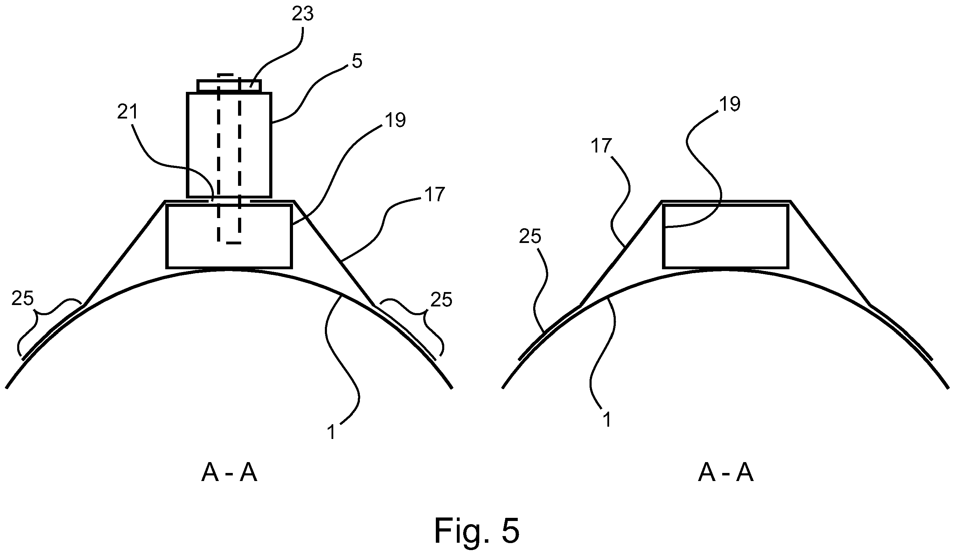

Anhand der Figuren 4 und 5 werden der Aufbau des Schwimmkörpers 1 und die Kopplung des membranverstärkten Tragwerks umfassend den Träger 5 und die Membran 11 mit dem Schwimmkörper 1 verdeutlicht werden.

Der Schwimmkörper 1 ist bevorzugt ein aufblasbarer Schwimmkörper, der beispielsweise aus sogenannter LKW-Plane (das ist eine gewebeverstärkte PVC-Folie) hergestellt wird. Diese LKW-Planen können beispielsweise durch Ultraschallschweißen luftdicht miteinander verschweißt werden. Die Schweißnähte sind ein bis zwei Zentimeter breit und können eine nahezu beliebige Länge annehmen.

Weil die Schweißnähte so breit sind, ergibt sich eine sehr dichte und belastbare Schweißverbindung. Anders ausgedrückt: Man kann ein rechteckiges Stück LKW-Plane zu einem Zylinder verschweißen, dessen Schweißnaht parallel zur Längsachse des Zylinders verläuft. Diese Schweißnaht ist extrem belastbar und luft- bzw. gasdicht. Entsprechend kann man an den Enden des Schwimmkörpers 1 einen Boden einschweißen, der ebenfalls luft- bzw. gasdicht ist.

In ähnlicher Weise ist es auch möglich, Öffnungen, beispielsweise in Form von Schraubverschlüssen, an der LKW-Plane durch Ultraschallschweißen luftdicht zu befestigten. Dadurch ist es möglich, Füllkörper, wie beispielsweise Kork, Styropor, aber auch zum Beispiel PET-Flaschen in das Innere des Schwimmkörpers 1 einzubringen. Diese Füllkörper sorgen dafür, dass auch im Falle eines Lochs in der LKW-Plane der Schwimmkörper 1 seine Schwimmfähigkeit nicht verliert, sondern weiter schwimmfähig bleibt. Dann hat dann die LKW-Plane die Funktion, die Füllkörper zusammen zu halten.

Um die Schwimmkörper 1 mit der Tragstruktur (insbesondere den Trägern 5 formschlüssig oder kraftschlüssig verbinden zu können, gibt es viele Möglichkeiten. Es ist zum Beispiel möglich, Laschen an die Außenseite des Schwimmkörpers durch Ultraschallschweißen zu befestigen und an diesen Laschen die Tragstruktur durch Klemmen oder formschlüssig zu befestigen. Eine weitere Option sind Klettverschlüsse. Anhand der Figur 4 ist ein Ausführungsbeispiel dargestellt, bei dem eine längliche Tasche 17 an das Äußere des Schwimmkörpers 1 geschweißt wird. Diese längliche Tasche 17 ist an beiden Enden offen. In diese Tasche wird ein Holm 19 eingeschoben, der beispielsweise als Vierkantrohr aus Aluminium gefertigt sein kann. Die Tasche 17 hat in diesem Ausführungsbeispiel zwei Öffnungen 21, deren Abstand dem Abstand der Träger 5 der membranversteiften Tragstruktur entspricht.

Dort wo die Öffnungen 21 in der Tasche 17 ausgebildet sind, haben die Holme 19 Innengewinde, so dass der Träger 5 mittels einer Befestigungsschraube 23 mit dem Holm 19 verschraubt werden kann. Damit ist erstens gewährleistet, dass die Tragstruktur bzw. die Träger 5 mit dem Schwimmkörper 1 verbunden sind. Außerdem werden die punktuellen Lasten, die von dem Träger 5 in den Schwimmkörper 1 eingeleitet werden müssen, über den Holm 19 auf eine große Länge des Schwimmkörpers 1 verteilt. Das hilft punktuelle Überlastungen oder Verformungen des Schwimmkörpers 1 zu vermeiden. Außerdem sorgt der Holm 19 dafür, dass der Abstand zwischen zwei benachbarten Trägern 5 konstant gehalten wird und auch Zugkräfte in der Membran 11 diesen Abstand nicht verändern. Das ist wichtig, um die mechanischen Belastungen der PV-Module 3 gering zu halten.

In der Figur 5 ist ein Schnitt entlang der Linie A-A gemäß Figur 4 dargestellt. Anhand dieser Darstellung kann man erkennen, dass der Träger 5 mit dem Holm 19 durch eine Schraube 23 miteinander verbunden werden kann. Dabei ragt die Schraube 23 durch die Öffnung 21 in die Tasche 17 und wird in ein Innengewinde des Holms 19 gedreht.

Als positiver Nebeneffekt ergibt sich bei dieser Konstruktion eine Klemmwirkung zwischen dem Träger 5 und dem Holm 19. Zwischen diesen beiden Bauteilen ist die längliche Tasche 17 eingeklemmt, so dass eine kraftschlüssige und eine formschlüssige Verbindung und Kraftübertragung zwischen den Trägern 5 dem Schwimmkörper 1 besteht.

Die längliche Tasche 17 ist, wie bereits erwähnt, an der Außenseite des Schwimmkörpers 1 durch eine Schweißnaht 25 mit dieser verbunden. Die Schweißnaht 25 ist beispielsweise ein bis zwei Zentimeter breit, so dass sich eine flächige und damit sehr belastbare stoffschlüssige Verbindung zwischen dem Schwimmkörper 1 und der länglichen Tasche 17 ergibt.

In der Figur 5 ist des Weiteren ein Schnitt lang der Linie B-B dargestellt. Sie zeigt die "ungestörte" Struktur bestehend aus Schwimmkörper 1, Tasche 17 und dem Holm 19, stellvertretend für die Bereiche, in denen keine Öffnung 21 in der Tasche 17 ausgebildet ist.

### Bezugszeichenliste:

1 Schwimmkörper
3 PV-Modul
5 Träger
7 Abspannseile
9 Wasserspiegel
11 Membran
13 gerader Abschnitt des Trägers5
15 Endabschnitt der Träger 5
17 längliche Tasche
19 Holm
21 Öffnung
23 Schraube
25 Schweißnaht

## Patentansprüche

1. Schwimmende Tragstruktur für Photovoltaik-Module umfassend mindestens zwei nebeneinander, insbesondere parallel zueinander angeordnete Schwimmkörper (1) und Träger (5) auf denen PV-Module (3) angebracht sind, **dadurch gekennzeichnet, dass** die Träger (5) zwei Abschnitte (13) aufweisen, deren Längsachsen einen Winkel (β) einschließen, wobei der Winkel (β) kleiner als 180° und größer als 135° ist, und dass zwischen zwei oder mehr als zwei nebeneinander angeordneten Trägern (5) oder Schwimmkörpern (1) eine Membran (11) vorgesehen ist, und dass mindestens zwei Träger (5) oder Schwimmkörper (1) und die Membran (11) ein membranversteiftes Tragwerk bilden.

2. Schwimmende Tragstruktur nach Anspruch 1, **dadurch gekennzeichnet, dass** die Endabschnitte (15) der Träger (5) und die Membran (11) direkt oder mittelbar miteinander formschlüssig oder kraftschlüssig miteinander verbunden sind.

3. Schwimmende Tragstruktur nach Anspruch 1 oder 2, **dadurch gekennzeichnet, dass** die Träger (5) aus einem Strangpressprofil bestehen, und dass der Winkel (β) durch Biegen des Strangpressprofils erzeugt wird.

4. Schwimmende Tragstruktur nach einem der vorhergehenden Ansprüche, **dadurch gekennzeichnet, dass** die Schwimmkörper (1) aus einer gewebeverstärkten Plane, bevorzugt einer mit Glasfasern verstärkten PVC-Plane, gefertigt sind und dass Schwimmkörper (1) aufblasbar sind und/oder mindestens teilweise mit einem schwimmfähigen Füllmaterial gefüllt sind.

5. Schwimmende Tragstruktur nach Anspruch 4, **dadurch gekennzeichnet, dass** die Schwimmkörper (1) ein oder mehrere verschließbare Öffnungen zum Aufblasen und/oder Befüllen aufweisen.

6. Schwimmende Tragstruktur nach Anspruch 4 oder 5, **dadurch gekennzeichnet, dass** an der Außenseite der Schwimmkörper (1) Laschen oder Taschen (17) aus gewebeverstärkter Plane angeschweißt sind.

7. Schwimmende Tragstruktur nach einem der vorhergehenden Ansprüche, **dadurch gekennzeichnet, dass** sie Koppelelemente (19, 23) aufweisen, welche die Träger (5) mit den Schwimmkörpern (1) formschlüssig, kraftschlüssig und/oder stoffschlüssig verbinden.

8. Schwimmende Tragstruktur nach Anspruch 7, **dadurch gekennzeichnet, dass** die Koppelelemente den Schwimmkörper (1) umschließen.

9. Schwimmende Tragstruktur nach Anspruch 6 oder 7, **dadurch gekennzeichnet, dass** die Koppelelemente (19) in die Taschen (17) der Schwimmkörper (1) eingesteckt oder eingeschoben werden.

10. Schwimmende Tragstruktur nach einem der vorhergehenden Ansprüche, **dadurch gekennzeichnet, dass** die Membran (11) das auf ihr auftreffende Sonnenlicht an eine Unterseite der PV-Module (3) reflektiert.

11. Schwimmende Tragstruktur nach einem der vorhergehenden Ansprüche, **dadurch gekennzeichnet, dass** die PV-Module (3) bifaziale PV-Module sind, die sowohl das auf einer Oberseite als auch das auf der Unterseite auftreffende Licht in elektrische Energie umwandeln.

12. Schwimmende Tragstruktur nach einem der vorhergehenden Ansprüche, **dadurch gekennzeichnet, dass** der Winkel (β) kleiner als 170° und größer als 150°, und insbesondere, dass der Winkel (β) kleiner als 165° und größer als 155° ist.

## Claims

1. Floating support structure for photovoltaic modules, comprising at least two floating bodies (1) and supports (5) arranged next to one another, in particular parallel to one another, on which PV modules (3) are mounted,
**characterized in that** the supports (5) have two portions (13) of which the longitudinal axes enclose an angle (β), the angle (β) being less than 180° and greater than 135°, **and in that** a membrane (11) is provided between two or more than two supports (5) or floating bodies (1) arranged next to one another,
**and in that** at least two supports (5) or floating bodies (1) and the membrane (11) form a membrane-reinforced supporting structure.

2. Floating support structure according to claim 1, **characterized in that** the end portions (15) of the supports (5) and the membrane (11) are directly or indirectly connected to one another in a form-fitting or force-fitting manner.

3. Floating support structure according to claim 1 or 2, **characterized in that** the supports (5) consist of an extruded profile, **and in that** the angle (β) is created by bending the extruded profile.

4. Floating support structure according to any of the preceding claims, **characterized in that** the floating bodies (1) are made of a fabric-reinforced tarpaulin, preferably a glass-fiber-reinforced PVC tarpaulin **and in that** floating bodies (1) are inflatable and/or at least partially filled with a buoyant filling material.

5. Floating support structure according to claim 4, **characterized in that** the floating bodies (1) have one or more closable openings for inflation and/or filling.

6. Floating support structure according to claim 4 or 5, **characterized in that** tabs or pockets (17) made of fabric-reinforced tarpaulin are welded to the outside of the floating bodies (1).

7. Floating support structure according to any of the preceding claims, **characterized in that** they have coupling elements (19, 23) which connect the supports (5) to the floating bodies (1) in a form-fitting, force-fitting and/or integrally bonded manner.

8. Floating support structure according to claim 7, **characterized in that** the coupling elements enclose the floating body (1).

9. Floating support structure according to claim 6 or 7, **characterized in that** the coupling elements (19) are inserted or pushed into the pockets (17) of the floating bodies (1).

10. Floating support structure according to any of the preceding claims, **characterized in that** the membrane (11) reflects the sunlight incident thereon onto the bottom of the PV modules (3).

11. Floating support structure according to any of the preceding claims, **characterized in that** the PV modules (3) are bifacial PV modules that convert the light incident on both the top and bottom into electrical energy.

12. Floating support structure according to any of the preceding claims, **characterized in that** the angle (β) is less than 170° and greater than 150°, and in particular **in that** the angle (β) is less than 165° and greater than 155°.

## Revendications

1. Structure porteuse flottante pour modules photovoltaïques comprenant au moins deux corps flottants (1) et supports (5) disposés l'un à côté de l'autre, en particulier parallèlement l'un à l'autre, sur lesquels sont montés des modules photovoltaïques (3), **caractérisée en ce que** les supports (5) présentent deux sections (13) dont les axes longitudinaux forment un angle (β), dans laquelle l'angle (β) est inférieur à 180° et supérieur à 135°, et **en ce qu'**une membrane (11) est prévue entre deux ou plus de deux supports (5) ou corps flottants (1) disposés l'un à côté de l'autre, et **en ce qu'**au moins deux supports (5) ou corps flottants (1) et la membrane (11) forment une ossature porteuse rigidifiée par une membrane.

2. Structure porteuse flottante selon la revendication 1, **caractérisée en ce que** les sections d'extrémité (15) des supports (5) et la membrane (11) sont reliées entre elles directement ou indirectement par complémentarité de forme ou à force.

3. Structure porteuse flottante selon la revendication 1 ou 2, **caractérisée en ce que** les supports (5) sont constitués d'un profilé extrudé, et **en ce que** l'angle (β) est créé par pliage du profilé extrudé.

4. Structure porteuse flottante selon l'une quelconque des revendications précédentes, **caractérisée en ce que** les corps flottants (1) sont fabriqués à partir d'une bâche renforcée par du tissu, de préférence une bâche en PVC renforcée par des fibres de verre, et **en ce que** les corps flottants (1) sont gonflables et/ou sont remplis au moins partiellement d'un matériau de remplissage flottant.

5. Structure porteuse flottante selon la revendication 4, **caractérisée en ce que** les corps flottants (1) présentent une ou plusieurs ouvertures pouvant être fermées pour le gonflage et/ou le remplissage.

6. Structure porteuse flottante selon la revendication 4 ou 5, **caractérisée en ce que** des pattes ou poches (17) de bâche renforcée par du tissu sont soudées sur la face extérieure des corps flottants (1).

7. Structure porteuse flottante selon l'une quelconque des revendications précédentes, **caractérisée en ce qu'**elle comporte des éléments d'accouplement (19, 23), lesquels relient les supports (5) aux corps flottants (1) par complémentarité de forme, à force et/ou par liaison de matière.

8. Structure porteuse flottante selon la revendication 7, **caractérisée en ce que**
les éléments d'accouplement entourent le corps flottant (1).

9. Structure porteuse flottante selon la revendication 6 ou 7, **caractérisée en ce que** les éléments d'accouplement (19) sont insérés ou glissés dans les poches (17) des corps flottants (1).

10. Structure porteuse flottante selon l'une quelconque des revendications précédentes, **caractérisée en ce que** la membrane (11) réfléchit la lumière du soleil qui la frappe vers une face inférieure des modules photovoltaïques (3).

11. Structure porteuse flottante selon l'une quelconque des revendications précédentes, **caractérisée en ce que** les modules PV (3) sont des modules PV bifaciaux qui convertissent en énergie électrique à la fois la lumière incidente sur une face supérieure et la lumière incidente sur la face inférieure.

12. Structure porteuse flottante selon l'une quelconque des revendications précédentes, **caractérisée en ce que** l'angle (β) est inférieur à 170° et supérieur à 150°, et notamment **en ce que** l'angle (β) est inférieur à 165° et supérieur à 155°.
